# EUROPEAN PATENT SPECIFICATION

(11) **EP 3 276 312 B1**
(45) Date of publication and mention of the grant of the patent: **18.12.2019**
(21) Application number: 17001067.2
(22) Date of filing: 23.06.2017
(51) Int. Cl.: G01F 15/00, F15D 1/02, G01F 15/18, G01F 15/14

(54) **LIQUID METER HAVING FLOW-STABILIZING FINS**
FLÜSSIGKEITSZÄHLER MIT DURCHFLUSSSTABILSIERENDEN RIPPEN
COMPTEUR DE LIQUIDE AYANT DES AILETTES DE STABILISATION

(30) Priority: 25.07.2016 FR 1670400
(43) Date of publication of application: 31.01.2018
(73) Proprietor: Diehl Metering S.A.S., 68300 Saint-Louis (FR)
(72) Inventor: DEVILLERS, Alexandre, FR - 68190 Enisheim (FR)
(74) Representative: Diehl Patentabteilung

(56) References cited:
- EP-A2- 0 953 677
- CN-A- 103 983 312
- CN-U- 201 991 882
- DE-B3- 10 327 934
- DE-B3- 10 360 839
- DE-U1- 20 211 983
- FR-A1- 2 091 908
- US-A- 4 821 768

## Description

The present invention relates to the field of fluidics and more particularly devices for measuring volumetric quantities of liquid fluid flowing in a supply or flow line or pipe.

More specifically, the subject of the invention is a meter for liquid fluid, wherein the inlet flow is, if not laminar, at least free of turbulence and eddies before it is introduced into the measuring chamber.

In particular, when the duct has, upstream of the meter, an elbow or a curved segment, a rotational movement is induced in the flow of liquid. This type of disrupted flow can have a significant impact on the performance, the reliability and the accuracy of the meter, especially for certain measuring technologies.

Moreover, water meters in particular have to comply with a regulatory level of measurement quality.

Thus, the standard EN 14154 specifies the tests to which a water meter is subjected, with application of standard disruptors, and which it has to successfully pass in order to be approved.

Currently, the most widespread solution for eliminating disruption, turbulence and eddies in the abovementioned context consists in employing a small plate that is mounted at the inlet of the intake end piece and extends transversely across the passage.

However, this small plate creates a significant obstacle to the flow and causes a non-negligible head loss.

In addition, as a separate part, it has to be mounted during a specific operation, thereby increasing the manufacturing costs of the meter and slowing down production.

Another known solution consists in inserting a nozzle provided with fins into the intake end piece of the chamber of the meter.

With this second known solution, it is also necessary to manufacture an additional part appropriate for the type of meter and to assemble it in a specific operation. In addition, the fitting of this insert in the form of a nozzle automatically reduces the initial flow cross section of the intake end piece, in addition to the reduction in cross section that results from the presence of the fins.

DE 103 27 934 B3 discloses a metering device for metering gas flow with an injection nozzle that reduces the cross section of the gas stream towards the measuring section of the metering device by diminishing the height of the flow channel, whereas the width of the flow channel stays more of less unchanged. Within the section of the injection nozzle having the large cross section, fins are arranged having triangular shape, the height of which increasing in the direction to the measuring section.

The document CN 201 991 882U discloses a reduced diameter flow pipe section that comprises a straight pipe section and sections that reduce the pipe diameter at the inlet and outlet end of the pipe section. A plurality of flow guiding ribs are arranged in the sections in which the pipe diameter is reduced.

The aim of the present invention is to overcome the drawbacks and limitations of the abovementioned known solutions.

To this end, the subject of the invention is a meter for liquid fluid, in particular a water meter, defined in the appended claims.

The invention will be understood better by virtue of the following description, which relates to preferred embodiments that are given by way of non-limiting examples and are explained with reference to the appended schematic drawings, in which:
Figures 1A and 1B are perspective views in two different directions of a water meter according to one embodiment of the invention, showing two stabilizing fins in the injection nozzle;
Figure 2 is a cross-sectional view on the plane containing the two fins of the meter shown in Figures 1A and 1B;
Figure 3 is a cross-sectional view on a plane perpendicular to the section plane in Figure 2 but containing the median longitudinal axis of the injection nozzle;
Figures 4 to 7 are partial schematic depictions of inlets of injection nozzles viewed in the direction of the median longitudinal axis, in accordance with various other embodiments of the meter of the invention;
Figure 8A is a partial cross-sectional view, on a plane similar to the one in Figure 3, of the injection nozzle of a meter according to the invention, equipped with a variant embodiment of the stabilizing fins; and Figure 8B is a partial cross-sectional view, on a plane similar to the one in Figure 2, of the injection nozzle of a meter according to another variant embodiment of the fins.

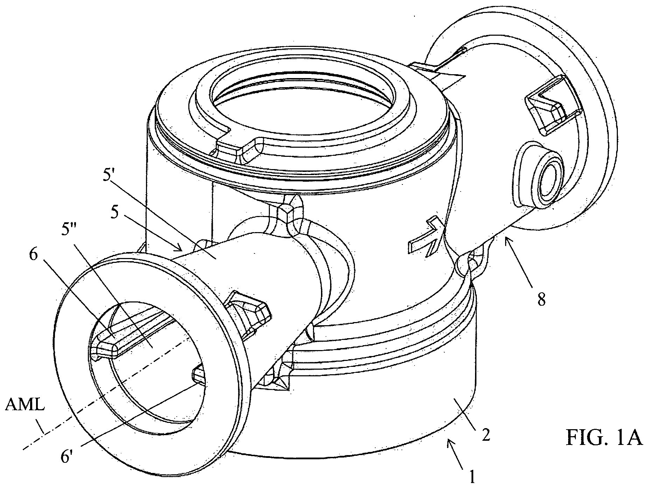

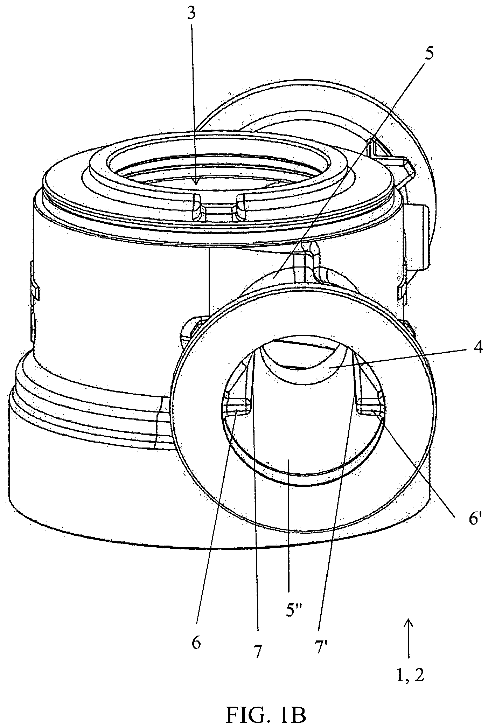

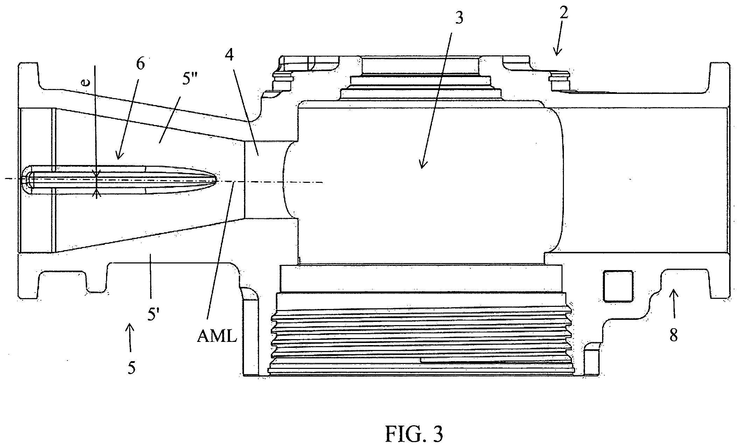

Figures 1 to 3 illustrate, in a non-limiting manner, a meter 1 for liquid fluid, in particular a water meter, comprising a body 2 enclosing a measuring chamber 3 with at least one liquid intake opening 4 that is extended towards the outside by an injection nozzle or a similar portion of duct 5, is formed in one piece with said body 2 and extends along a median longitudinal axis AML.

The body 2 also has at least one ejection end piece 8, generally situated on the opposite side from the injection nozzle 5.

In accordance with the invention, the or each injection nozzle 5 has at least one internal protruding structure 6, 6' in the form of a fin, which is produced in one piece with the internal face 5" of the wall 5' of the injection nozzle 5, is disposed in a plane containing the median longitudinal axis AML and extends along at least a part of the axial length of said nozzle 5.

The fins 6, 6', which stabilize the flow, at least the exterior zone of the flow (which is generally most exposed to rotational turbulence), are an integral part of the wall 5' of the injection nozzle 5. This specific embodiment avoids the need for any additional part or component and makes it possible to arrive at a simpler construction which is also quicker and less expensive to produce.

The body 2 of the meter 1 may have one or more injection nozzles 5 (at least one of which is equipped with the fins 6, 6') and one or more ejection or outlet end pieces 8.

As illustrated in Figures 1A, 1B and 4 and 6, in accordance with a preferred embodiment of the invention, the or each injection nozzle 5 has two facing fins 6 and 6' that are preferably opposite one another and mutually symmetrical with respect to the median longitudinal axis AML.

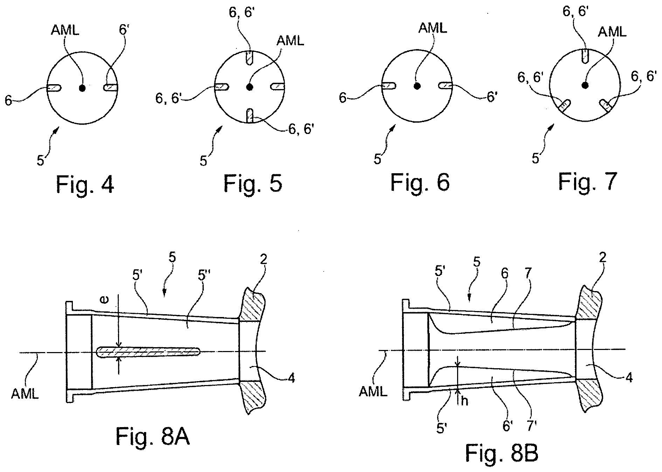

In a variant, and as shown in Figures 5 and 7, provision may also be made for the or each injection nozzle 5 to have at least three fins 6, 6' that protrude inwards from its internal wall 5' and are preferably distributed angularly in a regular manner around the median longitudinal axis AML.

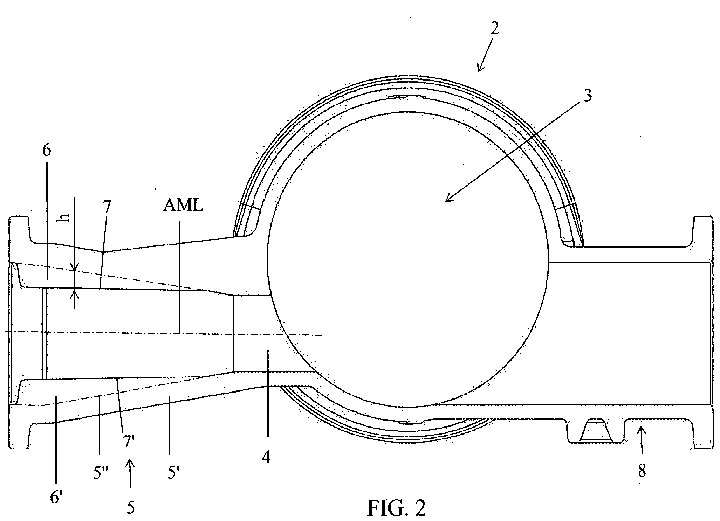

According to a variant embodiment of the invention that is efficient and easy to manufacture and is apparent from Figures 2 and 8B, the fin or each fin 6, 6' has a substantially flat structure, at least along a major part of its extent along the median longitudinal axis AML, possibly with a variable width or height h and/or a cross section with a variable exterior shape along said axis AML of the injection nozzle 5 in question.

According to the invention, the or each fin 6, 6' has a cross section with a variable, in particular decreasing, thickness e from its base that is integral with the internal face of the wall 5' of the injection nozzle 5 in question towards its respective free edge 7, 7'.

The lengthwise cross section of the fins 6, 6' can have for example a triangular shape, as shown in Figure 2, possibly with a variable height.

In order not to cause a head loss at the intake inlet 4 of the chamber 3, provision is advantageously made for the or each fin 6, 6' to end, in the direction of the axis AML, in front of the intake opening 4 associated with the corresponding injection nozzle 5, possibly gradually, preferably with a continuous reduction in its height or width h and/or in its thickness e (Figures 2, 3, 8A and 8B by way of examples).

A minimum head loss and optimum stabilization of the flow can be achieved when the fins 6, 6' have an aerodynamically profiled shape in the normal direction of flow of the liquid flowing through the injection nozzle 5.

In order not to create localized turbulence in their immediate vicinity, the fins 6, 6' preferably have peripheral edges with a rounded shape. In addition, at least some of said fins 6, 6' may also possibly have a curved or twisted shape along at least a part of their extent along the median longitudinal axis AML.

The latter arrangement may make it possible, for example, to counter particularly intense turbulence in an upstream part of the fin 6, 6', or to confer a controlled movement, which is not rectilinear or possibly laminar, on the flow in a downstream part of the fin 6, 6'.

According to the present invention, that is apparent from Figures 1 to 3, the or each injection nozzle 5 has a frustoconical design, with an internal passage that tapers in the direction of the intake opening 4, the or each fin 6, 6' having a substantially triangular overall shape such that the free internal edge 7, 7' of the fin 6, 6' in question extends parallel to the median longitudinalaxis AML, if appropriate also parallel to an opposite fin 6, 6' that is symmetrical with respect to said axis AML.

Finally, according to a preferred practical embodiment, the body 2 consists of a single moulded or cast piece of metal, thermoplastic or thermoset material, the or at least one injection nozzle 5, if appropriate the injection nozzles 5, having one or more internal radial fins 6, 6' produced in one piece or integrally with the wall 5' of the injection nozzle 5 in question.

The different fins 6, 6' are normally identical to one another, unless one or more of them have a specific action to carry out in relation to their position, the nature of the eddies and turbulence to be corrected (asymmetrical for example) or a particular effect to confer on the flow.

By virtue of the invention, it is thus possible to provide a meter 1 having a body 2 manufactured preferably with at least two fins 6, 6' which notably make it possible to stop any turbulent movement of the flow.

Consequently, it is possible to ensure that the flow lines are substantially parallel when they enter the measuring chamber 3: the flow through the meter 1 is improved, as are pressure drops.

The number, size, shape, arrangement and cross section that are chosen for the fins 6, 6' by a person skilled in the art may depend notably on the nature and the flow rate of the liquid, on the type and the intensity of the turbulence that agitates it, on the variation in pressure that is acceptable for the user and, of course, on the desired effect on the flow.

Thus, by virtue of the invention, the meter 1 maintains its metrological performance when a disruptive element, such as an elbow, is mounted upstream.

## Claims

1. Meter for liquid fluid, in particular water meter, comprising a body (2) enclosing a measuring chamber (3) with at least one liquid intake opening (4) that is extended towards the outside by an injection nozzle or a similar portion of duct (5), is formed in one piece with said body (2), and extends along a median longitudinal axis (AML),
whereas the or each injection nozzle (5) has at least one internal protruding structure (6, 6') in the form of a fin, which is produced in one piece with the internal face (5") of the wall (5') of the injection nozzle (5), is disposed in a plane containing the median longitudinal axis (AML), extends along at least a part of the axial length of said nozzle (5) and has a substantially triangular overall shape,
**characterized in that** the or each injection nozzle (5) has a frustoconical design, with an internal passage that tapers in the direction of the intake opening (4), wherein the free internal edge (7, 7') of the or each fin (6, 6') extends parallel to the median longitudinal axis (AML), wherein the or each fin (6, 6') has a cross section with a variable thickness (e) from its base that is integral with the internal face of the wall (5') of the injection nozzle (5) in question towards its respective free edge (7, 7').

2. Meter according to Claim 1, **characterized in that** the or each injection nozzle (5) has two facing fins (6 and 6') that are preferably opposite one another and mutually symmetrical with respect to the median longitudinal axis (AML).

3. Meter according to Claim 1 or 2, **characterized in that** the or each injection nozzle (5) has at least three fins (6, 6') that protrude inwards from its internal wall (5') and are preferably distributed angularly in a regular manner around the median longitudinal axis (AML).

4. Meter according to any one of Claims 1 to 3, **characterized in that** the fin or each fin (6, 6') has a substantially flat structure, at least along a major part of its extent along the median longitudinal axis (AML), possibly with a variable width or height (h) and/or a cross section with a variable exterior shape along said axis (AML) of the injection nozzle (5) in question.

5. Meter according to any one of Claims 1 to 4, **characterized in that** the or each fin (6, 6') has a cross section with a decreasing thickness (e) from its base that is integral with the internal face of the wall (5') of the injection nozzle (5) in question towards its respective free edge (7, 7').

6. Meter according to any one of Claims 1 to 5, **characterized in that** the or each fin (6, 6') ends, in the direction of the axis (AML), in front of the intake opening (4) associated with the corresponding injection nozzle (5), possibly gradually, preferably with a continuous reduction in its height or width (h) and/or in its thickness (e).

7. Meter according to any one of Claims 1 to 6, **characterized in that** the fins (6, 6') have an aerodynamically profiled shape in the normal direction of flow of the liquid flowing through the injection nozzle (5).

8. Meter according to any one of Claims 1 to 7, **characterized in that** the fins (6, 6') have peripheral edges with a rounded shape, at least some of said fins (6, 6') possibly having a curved or twisted shape along at least a part of their extent along the median longitudinal axis (AML).

9. Meter according to any one of Claims 1 to 8, **characterized in that** the free internal edge (7, 7') of the or each fin (6, 6') extends parallel to an opposite fin (6, 6') that is symmetrical with respect to said axis (AML).

10. Meter according to any one of Claims 1 to 9, **characterized in that** the body (2) consists of a single moulded or cast piece of metal, thermoplastic or thermoset material, the or at least one injection nozzle (5), if appropriate the injection nozzles (5), having one or more internal radial fins (6, 6') produced in one piece or integrally with the wall (5') of the injection nozzle (5) in question.

## Patentansprüche

1. Zähler für flüssiges Fluid, insbesondere ein Wasserzähler, umfassend einen Körper (2), der eine Messkammer (3) mit mindestens einer Flüssigkeitseinlassöffnung (4) umschließt, die in Richtung der Außenseite durch eine Einspritzdüse oder einen ähnlichen Abschnitt eines Kanals (5) erweitert ist, mit dem Körper (2) in einem Stück ausgebildet ist, und sich entlang einer mittleren Längsachse (AML) erstreckt,
wobei die oder jede Einspritzdüse (5) mindestens eine interne vorstehende Struktur (6, 6') in der Form eines Grates aufweist, der mit der Innenfläche (5") der Wand (5') der Einspritzdüse (5) in einem Stück produziert ist, in einer Ebene angeordnet ist, welche die mittlere Längsachse (AML) enthält, sich entlang mindestens eines Teils der axialen Länge der Düse (5) erstreckt und eine im Wesentlichen dreieckige allgemeine Form aufweist,
**dadurch gekennzeichnet, dass** die oder jede Einspritzdüse (5) eine kegelstumpfförmige Gestaltung aufweist, mit einem inneren Durchlass, der sich in der Richtung der Einlassöffnung (4) verjüngt, wobei sich die freie Innenkante (7, 7') des oder jedes Grates (6, 6') parallel zu der mittleren Längsachse (AML) erstreckt, wobei der oder jeder Grat (6, 6') einen Querschnitt mit einer variablen Dicke (e) von ihrer Basis aufweist, die einstückig mit der Innenfläche der Wand (5') der betreffenden Einspritzdüse (5) in Richtung ihrer jeweiligen freien Kante (7, 7') ausgebildet ist.

2. Zähler nach Anspruch 1, **dadurch gekennzeichnet, dass** die oder jede Einspritzdüse (5) zwei einander zugewandte Grate (6, 6') aufweist, die einander vorzugsweise gegenüberliegen und in Bezug auf die mittlere Längsachse (AML) wechselseitig symmetrisch sind.

3. Zähler nach Anspruch 1 oder 2, **dadurch gekennzeichnet, dass** die oder jede Einspritzdüse (5) mindestens drei Grate (6, 6') aufweist, die von ihrer Innenwand (5') nach innen vorstehen und vorzugsweise winklig in einer regelmäßigen Weise um die mittlere Längsachse (AML) verteilt sind.

4. Zähler nach einem der Ansprüche 1 bis 3, **dadurch gekennzeichnet, dass** der Grat oder jeder Grat (6, 6') eine im Wesentlichen flache Struktur aufweist, mindestens entlang eines großen Teils ihrer Ausdehnung entlang der mittleren Längsachse (AML), möglicherweise mit einer variablen Breite oder Höhe (h) und/oder einem Querschnitt mit einer variablen äußeren Form entlang der Achse (AML) der betreffenden Einspritzdüse (5).

5. Zähler nach einem der Ansprüche 1 bis 4, **dadurch gekennzeichnet, dass** der oder jeder Grat (6, 6') einen Querschnitt mit einer sich verringernden Dicke (e) von seiner Basis aufweist, die einstückig mit der Innenfläche der Wand (5') der betreffenden Einspritzdüse (5) in Richtung ihrer jeweiligen freien Kante (7, 7') ausgebildet ist.

6. Zähler nach einem der Ansprüche 1 bis 5, **dadurch gekennzeichnet, dass** der oder jeder Grat (6, 6') in der Richtung der Achse (AML) vor der Einlassöffnung (4) endet, die der entsprechenden Einspritzdüse (5) zugeordnet ist, möglicherweise graduell, vorzugsweise mit einer kontinuierlichen Reduzierung in ihrer Höhe oder Breite (h) und/oder in ihrer Dicke (e).

7. Zähler nach einem der Ansprüche 1 bis 6, **dadurch gekennzeichnet, dass** die Grate (6, 6') in der normalen Durchflussrichtung der Flüssigkeit, die durch die Einspritzdüsen (5) fließt, eine aerodynamisch profilierte Form aufweisen.

8. Zähler nach einem der Ansprüche 1 bis 7, **dadurch gekennzeichnet, dass** die Grate (6, 6') periphere Kanten mit einer abgerundeten Form aufweisen, wobei mindestens einige der Grate (6, 6') möglicherweise eine gewölbte oder verdrehte Form entlang mindestens eines Teils ihrer Ausdehnung entlang der mittleren Längsachse (AML) aufweisen.

9. Zähler nach einem der Ansprüche 1 bis 8, **dadurch gekennzeichnet, dass** sich die freie Innenkante (7, 7') des oder jedes Grates (6, 6') parallel zu einem entgegengesetzten Grat (6, 6') erstreckt, der in Bezug auf die Achse (AML) symmetrisch ist.

10. Zähler nach einem der Ansprüche 1 bis 9, **dadurch gekennzeichnet, dass** der Körper (2) aus einem einzelnen geformten oder gegossenen Stück von Metall, Thermoplast- oder Duroplastmaterial besteht, wobei die oder mindestens eine Einspritzdüse (5), gegebenenfalls die Einspritzdüsen (5), eine oder mehrere interne radiale Grate (6, 6') aufweisen, die in einem Stück oder einstückig mit der Wand (5') der betreffenden Einspritzdüse (5) produziert wurden.

## Revendications

1. Compteur pour fluide liquide, en particulier compteur d'eau, comprenant un corps (2) entourant une chambre de mesure (3) avec au moins une ouverture d'admission de liquide (4) qui est étendue vers l'extérieur par une buse d'injection ou une partie similaire de conduit (5), est formée en une pièce avec ledit corps (2), et s'étend le long d'un axe médian longitudinal (AML),
la ou chaque buse d'injection (5) présentant au moins une structure interne en saillie (6, 6') sous la forme d'une ailette, qui est réalisée d'une seule pièce avec la face interne (5") de la paroi (5') de la buse d'injection (5), est disposée dans un plan contenant l'axe médian longitudinal (AML), s'étend sur au moins une partie de la longueur axiale de ladite buse (5) et présente une forme globale sensiblement triangulaire,
**caractérisé en ce que** la ou chaque buse d'injection (5) a une conception tronconique, avec un passage interne qui se rétrécit dans la direction de l'ouverture d'admission (4), le bord interne libre (7, 7') de la ou de chaque ailette (6, 6') s'étend parallèlement à l'axe médian longitudinal (AML), la ou chaque ailette (6, 6') ayant une section transversale avec une épaisseur variable (e) depuis sa base qui est solidaire de la face interne de la paroi (5') de la buse d'injection (5) en question vers son bord libre (7, 7') correspondant.

2. Compteur selon la revendication 1, **caractérisé en ce que** la ou chaque buse d'injection (5) présente deux ailettes (6 et 6') se faisant face l'une à l'autre, de préférence opposées l'une à l'autre et mutuellement symétriques par rapport à l'axe médian longitudinal (AML).

3. Compteur selon la revendication 1 ou 2, **caractérisé en ce que** la ou chaque buse d'injection (5) présente au moins trois ailettes (6, 6') qui font saillie vers l'intérieur depuis sa paroi interne (5') et sont réparties de préférence de manière angulaire et régulière autour de l'axe médian longitudinal (AML).

4. Compteur selon l'une quelconque des revendications 1 à 3, **caractérisé en ce que** l'ailette ou chaque ailette (6, 6') présente une structure sensiblement plate, au moins sur une grande partie de son étendue le long de l'axe médian longitudinal (AML), éventuellement avec une largeur ou une hauteur (h) variable et/ou une section transversale avec une forme extérieure variable le long dudit axe (AML) de la buse d'injection (5) concernée.

5. Compteur selon l'une quelconque des revendications 1 à 4, **caractérisé en ce que** la ou chaque ailette (6, 6') présente, depuis sa base vers son bord libre (7, 7') correspondant, une section transversale d'épaisseur décroissante (e) qui est solidaire de la face interne de la paroi (5') de la buse d'injection (5) concernée.

6. Compteur selon l'une quelconque des revendications 1 à 5, **caractérisé en ce que** la ou chaque ailette (6, 6') se termine, dans la direction de l'axe (AML), devant l'ouverture d'admission (4) associée à la buse d'injection (5) correspondante, éventuellement progressivement, de préférence avec une réduction continue en hauteur ou en largeur (h) et/ou en épaisseur (e) .

7. Compteur selon l'une quelconque des revendications 1 à 6, **caractérisé en ce que** les ailettes (6, 6') ont une forme profilée de manière aérodynamique dans le sens normal d'écoulement du liquide s'écoulant à travers la buse d'injection (5).

8. Compteur selon l'une quelconque des revendications 1 à 7, **caractérisé en ce que** les ailettes (6, 6') présentent des bords périphériques de forme arrondie, au moins certaines desdites ailettes (6, 6') ayant éventuellement une forme courbée ou torsadée le long d'au moins une partie de leur étendue le long de l'axe médian longitudinal (AML).

9. Compteur selon l'une quelconque des revendications 1 à 8, **caractérisé en ce que** le bord interne libre (7, 7') de la ou de chaque ailette (6, 6') s'étend parallèlement à une ailette opposée (6, 6') qui est symétrique par rapport audit axe (AML).

10. Compteur selon l'une quelconque des revendications 1 à 9, **caractérisé en ce que** le corps (2) est constitué d'une seule pièce moulée ou coulée en matériau métallique, thermoplastique ou thermodurcissable, la ou au moins une buse d'injection (5), éventuellement les buses d'injection (5), comportant une ou plusieurs ailettes radiales internes (6, 6') réalisées en une pièce ou d'un seul tenant avec la paroi (5') de la buse d'injection (5) concernée.
